# EUROPÄISCHE PATENTANMELDUNG

(11) **EP 2 409 755 A1**
(43) Veröffentlichungstag der Anmeldung: **25.01.2012**
(21) Anmeldenummer: 10170449.2
(22) Anmeldetag: 22.07.2010
(51) Int. Cl.: B01D 53/62, B01D 53/96

(54) **Verfahren und Vorrichtung zur Aufbereitung einer verunreinigten alkalischen Aminosäuresalzlösung**

(71) Anmelder: SIEMENS AKTIENGESELLSCHAFT, 80333 München (DE)
(72) Erfinder: Goetheer, Earl Lawrence Vincent Dr., 2200 Mol (BE); Joh, Ralph Dr., 63500 Seligenstadt (DE); Giling, Erwin Johannes Martinus, 2625 AS Delft (NL); Schneider, Rüdiger, 65817 Eppstein (DE); Van der Meer, Johannes, 3622 EW Loenen aan de Vecht (NL); Verdoes, Dirk Dr., 7328 VE Apeldoorn (NL)

(57) **Zusammenfassung**

Die Erfindung betrifft ein Verfahren (1) zum Aufbereiten einer verunreinigten alkalischen Aminosäuresalzlösung (3). Zunächst wird in die Aminosäuresalzlösung (3) Kohlendioxid (2) eingebracht, wodurch Carbonat bzw. Carbonatsalze (4) ausfällen, die abfiltriert werden. Das verbleibende Filtrat wird dann abgekühlt, wobei Aminosäure bzw. Aminosäuresalze (7) auskristallisieren, die ebenfalls abfiltriert werden. Dann wird die Aminosäure bzw. das Aminosäuresalz (7) wieder gelöst, wodurch eine aufbereitete Aminosäuresalzlösung (15) zurück gewonnen wird. Die Erfindung betrifft zudem eine Vorrichtung (30) zur Durchführung des Verfahrens.

## Beschreibung

Die Erfindung betrifft ein Verfahren zum Aufbereiten einer verunreinigten Lösung, insbesondere einer verunreinigten alkalischen Aminosäuresalzlösung. Die Erfindung betrifft weiterhin eine Vorrichtung zur Aufbereitung einer verunreinigten Lösung zur Absorption von Kohlendioxid.

Bei fossilbefeuerten Kraftwerksanlagen zur Erzeugung elektrischer Energie entsteht durch die Verbrennung eines fossilen Brennstoffes ein kohlendioxidhaltiges Rauchgas. Zur Vermeidung bzw. zur Verringerung von Kohlendioxid-Emissionen muss Kohlendioxid aus den Rauchgasen abgetrennt werden. Zur Abtrennung von Kohlendioxid aus einem Gasgemisch sind allgemein verschiedene Methoden bekannt. Insbesondere zum Abtrennen von Kohlendioxid aus einem Rauchgas nach einem Verbrennungsprozess ist die Methode der Absorption-Desorption gebräuchlich. In großtechnischem Maßstab wird Kohlendioxid dabei mit einem Absorptionsmittel aus dem Rauchgas herausgewaschen.

In einem klassischen Absorptions-Desorptions-Prozess wird das Rauchgas in einer Absorptionskolonne mit einem selektiven Absorptionsmittel als Waschmittel in Kontakt gebracht, und dabei von dem Waschmittel absorbiert. Das nun mit Kohlendioxid beladene Absorptionsmittel wird zur Abtrennung des Kohlendioxids und Regenerierung des Absorptionsmittels in eine Desorptionskolonne geleitet. Das beladene Absorptionsmittel wird erwärmt, wobei Kohlendioxid von dem Absorptionsmittel wieder desorbiert wird und ein regeneriertes Absorptionsmittel gebildet wird. Das regenerierte Absorptionsmittel wird erneut zur Absorberkolonne geleitet, wo es wieder Kohlendioxid aus dem kohlendioxidhaltigen Abgas aufnehmen kann.

Gebräuchliche Absorptionsmittel zeigen eine gute Selektivität und eine hohe Kapazität für das abzutrennende Kohlendioxid. Besonders gut eignen sich Absorptionsmittel, die auf Aminen basieren wie z.B. Monoethanolamin. Auch in der chemischen Industrie werden in der Regel Aminlösungen als Absorptionsmittel eingesetzt.

Durch den Kontakt des Absorptionsmittels mit dem Rauchgas, werden neben dem Kohlendioxid eine große Menge an Verunreinigungen aus dem Rauchgas und Rauchgasnebenprodukte in das Absorptionsmittel eingebracht. Auch durch die ständige thermische Belastung wird im Laufe der Zeit das Absorptionsmittel in einem Absorptions-Desorptions-Prozess geschädigt. Folglich muss das Absorptionsmittel kontinuierlich ersetzt werden. Dabei wird mit den Verunreinigungen und Degradationsprodukten auch immer eine vergleichsweise große Menge an unverbrauchtem Absorptionsmittel aus dem Absorptions-Resorptions-Prozess ausgeschleust.

Bei der Verwendung von auf Amine basisierten Absorptionsmitteln können die Amine durch Destillation zurück gewonnen werden. Aminlösungen bilden mit den sauren Rauchgasnebenkomponenten stabile Salze. Durch die destillative Aufreinigung der Aminlösung, also durch Verdampfung der leichter flüchtigen Amine und deren anschließender Kondensation, ist eine Abtrennung der schwer siedenden Verunreinigungen und somit eine Reinigung der Aminlösung möglich. Der merkliche Dampfdruck der Amine, der für die destillative Aufreinigung ausgenutzt wird, bedeutet jedoch auch, dass während des Absorptions-Desorptions-Prozesses Amine in kleinem Anteil mit dem gereinigten Rauchgas in die Umwelt ausgetragen werden, was zu unerwünschten Luftbelastungen führt. Die destillativen Reinigungsverfahren erfordern zudem einen hohen Energieaufwand.

Aminosäuresalze hingegen weisen keinen messbaren Dampfdruck auf, und werden daher auch nicht mit dem Rauchgas in die Umwelt ausgetragen. Allerdings ist aus diesem Grund auch keine destillative Aufarbeitung einer Aminosäuresalzlösung möglich. Bisher ist kein Aufreinigungsverfahren für eine Aminosäuresalzlösung bekannt. Folglich muss die ausgeschleuste Menge an verbrauchte Aminosäuresalzlösung komplett entsorgt werden.

Eine Aufgabe der Erfindung besteht darin, ein Verfahren zum Aufbereiten einer verunreinigten alkalischen Aminosäuresalzlösung anzugeben, dass großindustriell einsetzbar ist und eine hohe Effizienz aufweist. Eine weitere Aufgabe der Erfindung besteht darin, eine Vorrichtung zur Aufbereitung einer verunreinigten alkalischen Aminosäuresalzlösung anzugeben, die in eine Kohlendioxid-Abscheidevorrichtung integrierbar ist.

Die auf ein Verfahren gerichtete Aufgabe der Erfindung ist erfindungsgemäß gelöst durch ein Verfahren zum Aufbereiten einer verunreinigten alkalischen Aminosäuresalzlösung nach Anspruch 1.

In einem ersten Prozessschritt wird in die Aminosäuresalzlösung Kohlendioxid eingebracht, wobei Carbonat- und/oder Carbamatsalze ausfällen. In einem weiteren, dem zweiten Prozessschritt, wird das ausgefällte Carbonat- und/oder Carbamatsalz abfiltriert, wobei ein Filtrat entsteht. In wiederum einem weiteren, dem dritten Prozessschritt, wird das Filtrat abgekühlt, wodurch Aminosäure und/oder des Aminosäuresalz auskristallisieren. In einem weiteren, dem vierten Prozessschritt, wird letztendlich das Aminosäure und/oder des Aminosäuresalz abfiltriert. Die Aminosäure und/oder des Aminosäuresalz wird dann in einem fünften und letzten Prozessschritt wieder in Lösung gegeben, sodass dadurch eine aufbereitete Aminosäuresalzlösung rück gewonnen wird.

Die Erfindung geht dabei von der Überlegung aus, eine verunreinigte alkalische Aminosäuresalzlösung durch eine selektive Kristallisation aufzubereiten. Die Erfindung macht sich dabei zu nutze, dass das Kristallisationsverhalten von Aminosäuren stark pH-Wert abhängig ist. In FIG 6 ist das Kristallisationsverhalten von Aminosäuren dargestellt. Das Diagramm zeigt eine typische Abhängigkeit der Löslichkeit von Aminosäuresalzen vom pH-Wert.

Die in Absorptions-Desorptions-Prozessen eingesetzten Aminosäuresalzlösungen zeigen in der Regel einen sehr hohen pH-Wert von zwischen ca. 10 und 13. Unter diesen Bedingungen liegt die Aminosäure als Carboxylat vor. Durch die negative Ladung des Carboxylats ist es gut in Wasser löslich. Die Erfindung sieht nun vor, die Wasserlöslichkeit der Aminosäure durch Absenken des pH-Wertes herabzusetzen. Die geringste Wasserlöslichkeit zeigen Aminosäuren am sogenannten isoelektrischen Punkt. Dort steht die Aminosäure als Carboxylat- und als Ammoniumform miteinander im Gleichgewicht (Zwitterion). Es muss aber nicht genau der isoelektrische Punkt sein, bei dem die Kristallisation mit besonders hoher Ausbeute abläuft. Der optimale pH-Wert zur Kristallisation für Methylalanin-Kalium liegt beispielsweise bei 9.0 bis 9.5.

Zur Absenkung des pH-Wertes ist die Verwendung von Kohlendioxid besonders vorteilhaft, da Kohlendioxid eine in dem Gesamtprozess vorhandene Komponente ist. Außerdem umfasst der Gesamtprozess einen Desorptionsprozess, sodass das Kohlendioxid in dem Desorptionsprozess wieder von der aufbereiteten Aminosäuresalzlösung entfernt werden kann, um die notwendige Alkalität der Aminosäuresalzlösung wieder zu erreichen.

Je nach Reaktionsweg, den das Aminosäuresalz bevorzugt nimmt, bildet sich bei der Begasung mit Kohlendioxid vornehmlich das Carbamat der Aminosäure oder aber Bicarbonat bzw. Carbonat. Im Falle von bicarbonatbildenden Aminsäuresalzen, ist das gebildete Bicarbonat häufig noch weniger löslich als die Aminosäuren selbst, sodass schon bei der Begasung das Alkallhydorgencarbonat mit Kohlendioxid in der Regel Kaliumhydrogencarbonat ausfällt. Der kristalline Feststoff wird abfiltriert und die verbleibende Mutterlauge wird einem Kristallisationsreaktor zugeführt, in dem die Lösung abgekühlt wird. Dabei fällt die Aminosäure in reiner Form aus.

Durch das erfindungsgemäße Verfahren ist es erstmals möglich, Verunreinigungen, die sich in kleinen Konzentrationen in einer aminosäuresalzbasierten Lösungsmittels aufgrund von Eintrag durch das Rauchgas oder durch Degradation des Lösungsmittels entstehen abzutrennen. Dabei wird die Aminosäure durch Zugabe von Kohlendioxid im pH-Wert so beeinflusst, dass die reine Aminosäure auskristallisiert und die Verunreinigungen mit der verbleibenden Lösung (Mutterlauge) abgetrennt werden können. Anschließend kann das Aminosäuresalz wieder aufgelöst und als aktive Substanz in einer Lösung wiederverwendet werden.

Das Verfahren ist auch für Aminosäuresalzlösungen geeignet, deren Aminosäure bevorzugt Carbamat statt Bicarbonat bilden.

In einem vorteilhaften Optimierungsschritt des Verfahrens, wird die verunreinigte alkalische Aminosäuresalzlösung vor dem Einbringen von Kohlenstoffdioxid aufkonzentriert. Dadurch ist eine höhere Ausbeute der kristallisierten Aminosäure erzielbar. Zudem verbleibt weniger Aminosäuresalz in der verbleibenden Lösung (Mutterlauge), welches zusammen mit den abgetrennten Verunreinigungen entsorgt werden muss.

Das aufkonzentrieren der Aminosäuresalzlösung erfolgt dabei vorteilhafterweise durch die Verwendung von Niederdruckdampf, der ohnehin in dem Gesamtprozess vorhanden ist. Den Gesamtprozess umfasst eine Abscheidevorrichtung für Kohlendioxid für die ebenfalls Dampf für den Desorptionsprozess benötigt wird. Weiterhin umfasst den Gesamtprozess ein fossil befeuerter Kraftwerksprozess, in dem Heißdampf zur Energiegewinnung erzeugt wird. Durch das aufkonzentrieren der Aminosäuresalzlösung wird Lösungsmittel verdampft, welches in einem nachgeschalteten Kondensationsprozess gekühlt und zu einem Kondensat kondensiert wird.

Das Kondensat kann nun vorteilhaft wieder zum Lösen der abfiltrierten Aminosäure bzw. des Aminosäuresalzes und somit zur Rückgewinnung einer aufbereiteten Aminosäuresalzlösung verwendet werden. Dadurch wird das Kondensat weitgehend im Kreislauf gehalten wodurch eine zusätzliche Einbringung eines Lösemittels (Wasser) eingespart wird.

Bei einer weiteren vorteilhaften Ausgestaltung des Verfahrens wird das ausgefällte Carbonat bzw. Carbonatsalze ebenfalls wieder in der aufbereiteten Aminosäuresalzlösung gelöst. Auf diese weise wird der aufbereiteten Aminosäuresalzlösung wieder Kalium zugeführt, sodass ein Absorptionsmittel für die selektive Absorption von Kohlendioxid gebildet wird. Carbonat bzw. Carbonatsalze umfassen dabei Carbonat- und Bicarbonatsalze. Ohne die Verwendung des in dem Verfahren durch Ausfällung gewonnenen Carbonats bzw. der Carbonatsalze müsste sonst die aufbereitete Aminosäuresalzlösung zusätzlich wieder mit Kalium-Bicarbonat angereichert werden.

Die nach der Durchführung des Verfahrens anfallende Mutterlauge enthält neben den Verunreinigungen auch noch vergleichsweise große Mengen an gelöster Aminosäure. Daher ist es vorteilhaft, einen Teilstrom der Mutterlauge wieder zurück auf den Verdampfer zu geben und so ein weiteres Mal der Aufreinigung zuzuführen.

Das Verfahren kommt in besonders vorteilhafter weise integriert in einen Abscheideprozess für Kohlendioxid zum Einsatz. Der Abscheideprozess umfasst dabei einen Absorptionsprozess und einen Desorptionsprozess. Dadurch ist es vorteilhaft möglich, dass das für die Einbringung in das Verfahren benötigte Kohlenstoffdioxid direkt dem Desorptionsprozess für Kohlendioxid entnommen wird. Somit wird eine im Gesamtprozess vorhandene Komponente genutzt, und auf die zusätzliche Bereitstellung eines Stoffes zur Absenkung des pH-Wertes kann verzichtet werden.

Der im Gesamtprozess vorhandene Desorptionsprozess kann dabei ebenfalls vorteilhaft dafür genutzt werden, um das in der aufbereiteten Aminosäuresalzlösung enthaltene Kohlendioxid wieder zu desorbieren um somit die notwendige Alkalität der Aminosäuresalzlösung für die selektive Absorption von Kohlendioxid in dem Absorptionsprozess des Abscheideprozesses wieder zu erreichen.

Die auf eine Vorrichtung gerichtete Aufgabe der Erfindung ist erfindungsgemäß gelöst durch eine Vorrichtung zur Aufbereitung eines verunreinigten Absorptionsmittels für Kohlendioxid, mit einem ersten Reaktor, einem ersten Filter, der über eine Leitung an den ersten Reaktor angeschlossenen ist, einem zweiten Reaktor, der über eine Leitung an dem ersten Filter angeschlossenen ist, einem zweiten Filter, der an dem zweiten Reaktor angeschlossen ist, und einem Dissolver, der an den zweiten Filter angeschlossen ist.

Das erfindungsgemäße Verfahren wird vorteilhaft in der Vorrichtung zur Aufbereitung eines verunreinigten Absorptionsmittels betrieben.

Besonders von Vorteil ist die Vorrichtung betreibbar, wenn sie in eine Abscheidevorrichtung für Kohlendioxid integriert ist. Die Abscheidevorrichtung umfasst einen Absorptionsmittelkreislauf und einen Speicher für Kohlendioxid. Der erste Reaktor ist dabei mit dem Speicher über eine Leitung zur Zuführung von Kohlendioxid verbunden, und mit dem Absorptionsmittelkreislauf über eine Leitung zur Zuführung eines verunreinigten Lösungsmittels. Dadurch ist ein aufzubereitendes Absorptionsmittel direkt aus dem Absorptionsmittelkreislauf in die Vorrichtung zur Aufbereitung des verunreinigten Absorptionsmittels leitbar. Und auch bereits abgetrenntes Kohlendioxid aus der Abscheidevorrichtung ist für die Vorrichtung nutzbar.

In einer vorteilhaften Ausgestaltung der Vorrichtung ist dem ersten Reaktor ein Verdampfer vorgeschaltet. Der Verdampfer ist an eine Dampfleitung angeschlossen, sodass er durch einen zuführbaren Dampf beheizbar ist. Die Dampfleitung verbindet den Verdampfer beispielsweise mit einem Dampferzeuger einer fossil befeuerten Kraftwerksanlage. Dadurch ist ein im Betrieb ohnehin zur Verfügung stehender Dampf der Kraftwerksanlage für den Verdampfer zur Beheizung nutzbar, wodurch zusätzliche Heizenergie für den Verdampfer eingespart wird.

Bei einer vorteilhaften Weiterentwicklung der Vorrichtung ist der Verdampfer über eine Leitung mit dem Dissolver verbunden. Über die Leitung ist dem Dissolver kondensierter Dampf als Lösemittel aus dem Verdampfer zuführbar. Somit ist der kondensierte Dampf aus dem Verdampfer weiterhin verwendbar und es muss keine zusätzliche Komponente als Lösemittel von außen eingebracht werden. Weiterhin ist in einer zweckmäßigen Weiterentwicklung auch der erste Filter über eine Leitung mit dem Dissolver verbunden. Dadurch ist ein in dem ersten Reaktor ausfällendes Aminosäuresalz wieder in dem Dessolver verwendbar.

Folgend werden Ausführungsbeispiele der Erfindung anhand von beigefügten schematischen Zeichnungen näher erläutert. Es zeigt:
- FIG 1: ein Verfahren zum Aufbereiten einer verunreinigten alkalischen Aminosäuresalzlösung,
- FIG 2: ein dem in FIG 1 gezeigten Verfahren vorgeschalteter Konzentrationsprozess,
- FIG 3: eine Weiterentwicklung des Verfahrens aus FIG 1 und FIG 2,
- FIG 4: eine Vorrichtung zur Aufbereitung eines verunreinigten Absorptionsmittels für Kohlendioxid,
- FIG 5: eine Weiterentwicklung der Vorrichtung zur Aufbereitung eines verunreinigten Absorptionsmittels für Kohlendioxid aus FIG 4

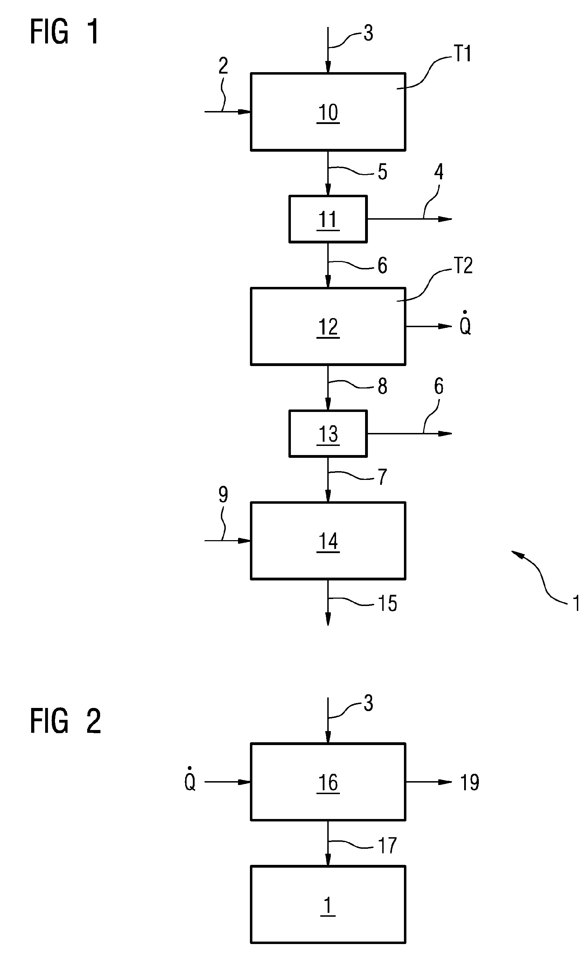

Das in FIG 1 gezeigte Aufbereitungsverfahren 1 umfasst im Wesentlichen fünf aufeinander folgende Verfahrensschritte.

In dem ersten Verfahrensschritt 10 des Aufbereitungsverfahren 1 wird Kohlendioxid 2 und eine verunreinigte Aminosäuresalzlösung 3 eingebracht. Der erste Verfahrensschritt 10 findet dabei vorzugsweise bei einer Temperatur T1 zwischen 50 und 70 °C statt. Zudem ist es vorteilhaft, wenn das Kohlendioxid 2 in die verunreinigte Aminosäuresalzlösung 3 durch rühren oder mixen eingebracht wird. Durch das in Kontakt bringen der verunreinigten Aminosäuresalzlösung 3 mit dem Kohlendioxid 2 fällt Carbonat bzw. Carbonatsalzen 4 aus. Den Verfahrensschritt 10 verlässt eine Suspension 5 aus Carbonat bzw. Carbonatsalz und Mutterlauge 6, und wird dem zweiten Verfahrensschritt 11 zugeführt.

In dem zweiten Verfahrensschritt 11 wird das ausgefällte Carbonat bzw. Carbonatsalz 4, beispielsweise Kaliumhydrogencarbonat von der Mutterlauge 6 abfiltriert und getrennt von der Mutterlauge 6 aus dem Verfahrensschritt 11 ausgeleitet.

Die Mutterlauge 6 wird dem dritten Verfahrensschritt 12 zugeführt. Im dritten Verfahrensschritt 12 wird der Mutterlauge 6 Wärme ***Q̇*** entzogen. Es wird vorzugsweise eine Temperatur T2 von zwischen 10 und 50 °C eingestellt. Dadurch wird die Mutterlauge 6 abkühlt und es kommt zu einer Kristallisation von Aminosäure bzw. Aminosäuresalz 7. Den dritten Verfahrensschritt 12 verlassen eine Suspension 8 aus Aminosäure bzw. Aminosäuresalz 7 und Mutterlauge 6, und werden dem vierten Verfahrensschritt 13 zugeführt.

In dem vierten Verfahrensschritt 13 wird die kristallisierte Aminosäure bzw. das Aminosäuresalz 7 von der Mutterlauge 6 abfiltriert und auch getrennt von der Mutterlauge 6 aus dem vierten Verfahrensschritt 13 ausgeleitet. Die kristallisierte Aminosäure bzw. das Aminosäuresalz 7 wird nun dem fünften Verfahrensschritt 14 zugeführt.

In dem fünften Verfahrensschritt 14 erfolgt die Rückgewinnung einer aufbereiteten Aminosäuresalzlösung 15. Dazu wird dem fünften Verfahrensschritt 14 das kristalline Aminosäuresalz 7 und ein Lösungsmittel 9 zugeführt, und das kristalline Aminosäuresalz 7 in dem Lösungsmittel gelöst. Die dabei gebildete aufbereitete Aminosäuresalzlösung 15 wird aus dem fünften Verfahrensschritt 14 ausgeleitet.

FIG 2 zeigt eine vorteilhafte Weiterbildung des in FIG 1 dargestellten Aufbereitungsverfahrens 1. Dem Aufbereitungsverfahren 1 ist dazu ein Konzentrationsprozess 16 vorgeschaltet. Der Übersichtlichkeit ist eine Ausführungsform, bei der Konzentrationsprozess 16 Bestandteil des Aufbereitungsverfahrens 1 ist, nicht zusätzlich gezeigt. Dem Konzentrationsprozess 16 wird die verunreinigte Aminosäuresalzlösung 3 und Wärmeenergie *Q̇* zugeführt, wodurch die verunreinigte Aminosäuresalzlösung 3 aufkonzentriert wird. Die zugeführte Wärmeenergie *Q̇* kann mit Heißdampf 18 übertragen werden, der durch einen Dampferzeugungsprozess eines Kraftwerksprozesses bereit gestellt wird. Durch das aufkonzentrieren der verunreinigte Aminosäuresalzlösung 3 wird Lösungsmittel verdampft, und in Form von Kondensat 19, getrennt von einer aufkonzentrierten Aminosäuresalzlösung 17 aus dem Konzentrationsprozess 16 ausgeleitet. Die aufkonzentrierte Aminosäuresalzlösung 17 wird dem nachgeschalteten Aufbereitungsverfahren 1 zugeführt.

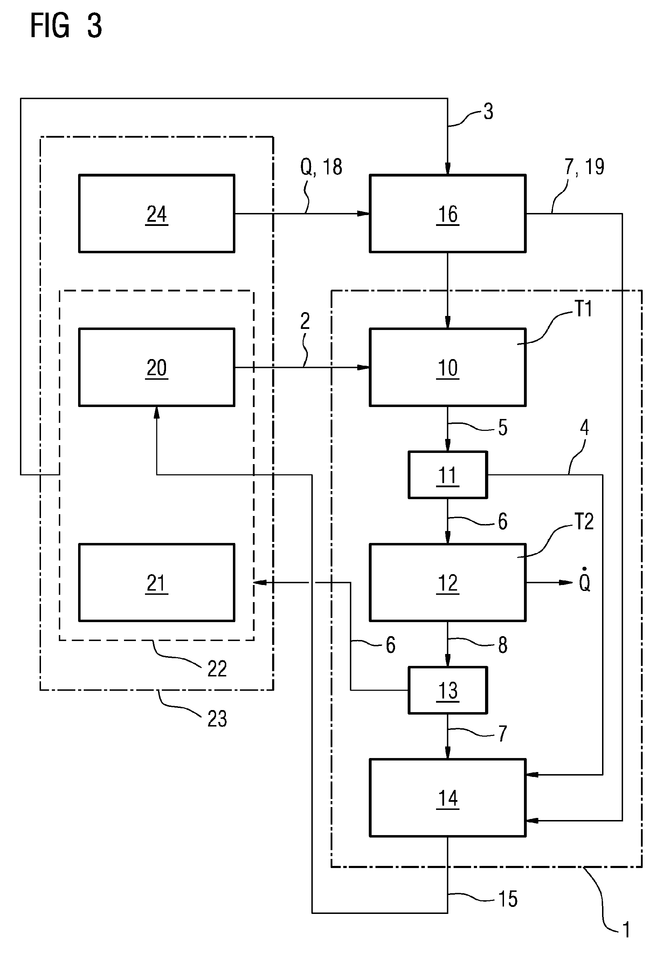

FIG 3 zeigt eine vorteilhafte Weiterentwicklung des Aufbereitungsverfahrens 1. Dargestellt sind im Wesentlichen der erste Verfahrensschritt 10 bis zum fünften Verfahrensschritt 14, der dem ersten Verfahrensschritt 10 vorgeschaltete Konzentrationsprozess 16, und ein fossil befeuerter Kraftwerksprozess 23. Der Kraftwerksprozess 23 umfasst dabei einen Desorptionsprozess 20 und einen Absorptionsprozess 21.

In der Weiterentwicklung der Ausführungsform der Erfindung gemäß FIG1 und FIG 2 wird in der Ausführungsform der FIG 3 nun das Kondensat 19 aus dem Konzentrationsprozess 16 dem fünften Verfahrensschritt 14 zugeführt. Das Kondensat 19 dient dabei als Lösungsmittel 9 zum lösen des Carbonatsalzes 4 und somit zum Erzielen einer aufbereiteten Aminosäuresalzlösung 15.

Zudem ist gezeigt, dass die verunreinigte Aminosäuresalzlösung 3, die dem Konzentrationsprozess 16 zugeführt wird, dem Abscheideprozess 22 entnommen wird.

Dargestellt ist zudem die Zuführung von Kohlendioxid 2 in den ersten Verfahrensschritt 10 aus dem Desorptionsprozess 20. Der Desorptionsprozess 20 weist einen Desorber und einen Speicher, bzw. eine Leitung für Kohlendioxid 2 auf, aus welcher das Kohlendioxid 2 entnommen wird.

Die Wärmeenergie Q, die dem Konzentrationsprozess zugeführt wird, wird in Form von Heißdampf 18 aus einem Dampferzeugungsprozess 24 des Kraftwerksprozesses 23 entnommen. Dabei wird vorzugsweise Heißdampf 18 zwischen 100 und 150 °C verwendet.

Das in dem zweiten Verfahrensschritt 11 gebildete Carbonat bzw. Carbonatsalz 4 wird zusammen mit der kristallinen Aminosäure bzw. dem Aminosäuresalz 7 in den fünften Verfahrensschritt 14 geleitet. Schlussendlich wird die im fünften Verfahrensschritt 14 aufbereitete Aminosäuresalzlösung 15 wieder in den Abscheideprozess 22 zurück geführt, und zur Desorption in den Desorptionsprozess 20 geleitet. Die nach der Aminosäurekristallisation verbleibende Mutterlaufe aus dem Verfahrensschritt 13 wird geteilt und anteilig in den Abscheideprozess 22 zurückgegeben (recycliert). Nicht dargestellt ist hier der Anteil, der aus dem Prozess ausgeleitet und als Abfall entsorgt werden muss.

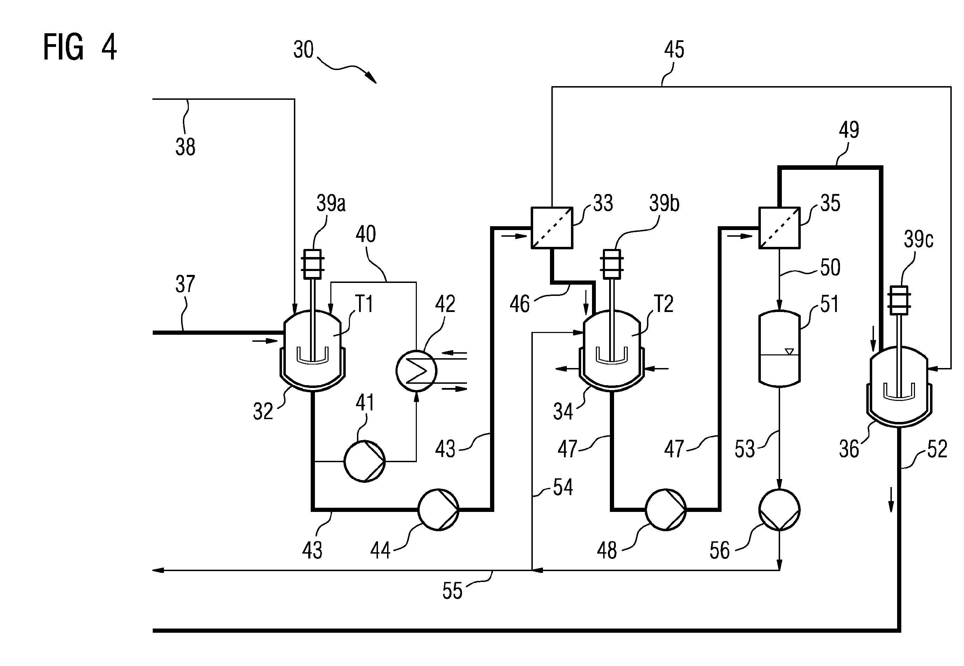

FIG 4 zeigt eine Ausführungsform der erfindungsgemäßen Vorrichtung 30 zur Aufbereitung eines verunreinigten Absorptionsmittels für Kohlendioxid. Die wesentlichen Komponenten der FIG 4 sind ein erster Reaktor 32, ein erster Filter 33, ein zweiter Reaktor 34, ein zweiter Filter und ein Dissolver 36.

Der erste Reaktor 32 weist eine Zuführleitung für ein verunreinigtes Absorptionsmittel 37 und eine Zuführleitung für Kohlendioxid 38 auf. Die Zuführleitung 37 ist an einer Kohlendioxid-Abscheidevorrichtung (C02-Capture Plant) für die Zuleitung eines verunreinigten Absorptionsmittels angeschlossen. Die Kohlendioxid-Abscheidevorrichtung ist hier nicht dargestellt. Die Zuführleitung für Kohlendioxid 38 ist ebenfalls an der Kohlendioxid-Abscheidevorrichtung angeschlossen und dient der Zuführung von bereits aus einem Rauchgas abgetrenntem Kohledioxid.

Der erste Reaktor 32 umfasst ein Rührwerk 39a und ist in eine Kühlschleife 40 geschaltet, in welche eine Pumpe 41 und einen Kühler 42 geschaltet ist. Durch den Kühler 42 ist Wärmeenergie aus dem ersten Reaktor 32 abführbar, wodurch eine Temperatur T1 in dem ersten Reaktor 32 einstellbar ist. Denkbar sind auch andere Konzepte zur Einstellung der Temperatur T1. Zur Ausleitung einer Suspension weist der erste Reaktor 32 eine Leitung 43 auf. Die Leitung 43 verbindet den ersten Reaktor mit dem ersten Filter 33. In die Leitung 43 ist eine Pumpe 44 geschaltet.

Der erste Filter 33 ist für die Abscheidung einer kristallinen Feststoffkomponente, vorzugsweise Kaliumhydrogencarbonat, von einer flüssigen Komponente ausgelegt. Der erste Filter 33 weist eine Auslassleitung 45 für den Transport einer abfiltrierten Feststoffkomponente auf, und ist über eine Leitung 46 mit dem zweiten Reaktor 34 verbunden.

Der zweite Reaktor 34 umfasst ebenfalls ein Rührwerk 39b und ist über die Zufuhr eines Kühlmediums kühlbar, sodass eine Temperatur T2 einstellbar ist. An den zweiten Reaktor 34 ist zur Ausleitung einer Suspension eine Leitung 47 angeschlossen. Die Leitung 47 verbindet den zweiten Reaktor 34 mit dem zweiten Filter 35. In die Leitung 47 ist eine Pumpe 48 geschaltet.

Der zweite Filter 35 ist ebenfalls wie der erste Filter 33 für die Abscheidung einer kristallinen Feststoffkomponente, vorzugsweise der Aminosäure, von einer flüssigen Komponente ausgelegt. Der zweite Filter 35 weist dazu eine Auslassleitung 49 für den Transport einer abfiltrierten Feststoffkomponente auf, und ist über eine Leitung 50 mit einem Sammelbehälter 51 verbunden. Die Auslassleitung 49 verbindet den zweiten Filter 35 mit dem Dissolver 36. Der Dissolver 36 ist mit einem Rührer 39c , z.B. einem Scheibenrührer, ausgerüstet, der die Funktion hat, kristalline Agglomerate wieder in Lösung zu bringen. Dem Dissolver 36 kann dazu noch ein Lösungsmittel, beispielsweise Wasser zugeführt werden.

Vorteilhafterweise verbindet auch die Auslassleitung 45 den ersten Filter 33 mit dem Dissolver 36. An den Dissolver 36 ist eine Rückführleitung 52 angeschlossen. Nicht dargestellt ist, dass die Rückführleitung 52 zur Ausleitung eines aufbereiteten Absorptionsmittels mit einer Abscheidevorrichtung für Kohlendioxid (CO2-Capture Plant) verbunden ist.

Der Sammelbehälter 51 ist für eine flüssige Komponente ausgelegt und weist eine Auslassleitung 53 auf, die in eine erste Teilstromleitung 54 und eine zweite Teilstromleitung 55 aufzweigt. In die Auslassleitung 53 ist eine Pumpe 56 geschaltet. Die erste Teilstromleitung 54 ist dabei an den zweiten Reaktor 34 angeschlossen. Die zweite Teilstromleitung 55 ist zur Ausleitung einer verbliebenen flüssigen Komponente vorgesehen.

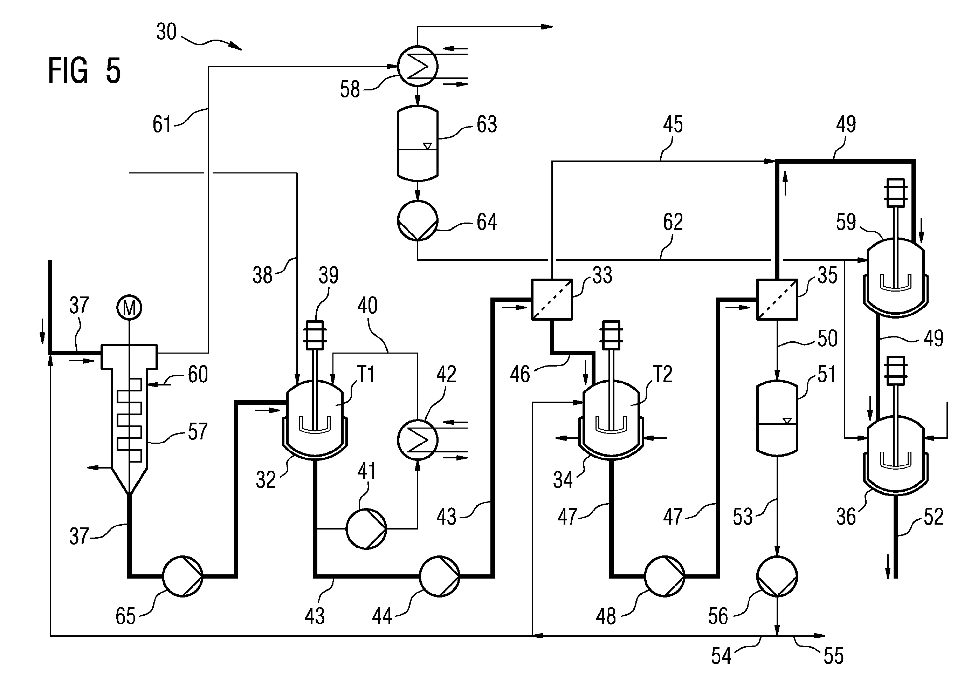

FIG 5 zeigt eine Weiterbildung der in FIG 4 gezeigten Vorrichtung 30. Im Unterscheid zu FIG 4 umfasst das Ausführungsbeispiel der FIG 5 zusätzlich im Wesentlichen einen Verdampfer 57, einen Kondensator 58 und einen Feststoffsammler 59.

Der Verdampfer 57 ist in die Zuführleitung für ein verunreinigtes Absorptionsmittel 37 geschaltet und als Filmverdampfer ausgelegt. An den Verdampfer 57 ist zudem eine Dampfleitung 60 angeschlossen, welche den Verdampfer 57 mit einem Dampferzeuger einer fossil befeuerten Kraftwerksanlage verbindet, und in die eine Pumpe 65 geschaltet ist. Neben einer Suspension, die aus dem Verdampfer 57 ausleitbar ist, ist über eine Leitung 61 ein Dampf ausleitbar. Die Leitung 61 verbindet den Verdampfer 57 mit dem Kondensator 58. An den Kondensator 58 ist eine Kondensatleitung 62 angeschlossen, die den Kondensator 58 mit dem Feststoffsammler 59 verbindet. In die Kondensatleitung 62 sind ein Sammelbehälter 63 und eine Pumpe 64 geschaltet.

In dem Ausführungsbeispiel der FIG 5 ist der Feststoffsammler 59 in die Auslassleitung 49 geschaltet, und auch die Auslassleitung 45 ist an dem Feststoffsammler 59 angeschlossen.

Die erste Teilstromleitung 54 ist im Ausführungsbeispiel der FIG 5 an dem zweiten Reaktor 34 angeschlossen und zudem an der Zuführleitung für ein verunreinigtes Absorptionsmittel 37 wodurch ein Kreislauf für ein Absorptionsmittel gebildet ist.

## Patentansprüche

1. Verfahren (1) zum Aufbereiten einer verunreinigten alkalischen Aminosäuresalzlösung (3), umfassend die Schitte
- einbringen von Kohlendioxid (2) in die Aminosäuresalzlösung (3) und dadurch ausfällen von Carbonat- und/oder Carbonatsalzen (4),
- abfiltrieren der ausgefällten Carbonat- und/oder Carbonatsalze (4),
- abkühlen des Filtrats und dadurch auskristallisieren der Aminosäure und/oder des Aminosäuresalzes (7),
- abfiltrieren des kristallisierten Aminosäure und/oder des Aminosäuresalzes (7),
- lösen der abfiltrierten Aminosäure und/oder des Aminosäuresalzes (7) und dadurch rück gewinnen einer aufbereiteten Aminosäuresalzlösung (15).

2. Verfahren (1) nach Anspruch 1, bei dem die verunreinigte alkalische Aminosäuresalzlösung (3) vor dem Einbringen von Kohlenstoffdioxid (2) aufkonzentriert wird.

3. Verfahren (1) nach Anspruch 2, bei dem zum aufkonzentrieren in die Aminosäuresalzlösung (3) Heißdampf (18) eingebracht wird, wobei eine aufkonzentrierte Aminosäuresalzlösung (17) und ein Kondensat (19) gebildet wird.

4. Verfahren (1) nach Anspruch 3, wobei das Kondensat (19) zum lösen der abfiltrierten Aminosäure und/oder des Aminosäuresalzes (15) verwendet wird.

5. Verfahren (1) nach einem der Ansprüche 1 oder 4, bei dem die ausgefällten Carbonat- und/oder Carbonatsalze (4) in der aufbereiteten Aminosäuresalzlösung (15) gelöst werden.

6. Verfahren (1) nach einem der Ansprüche 1 bis 5, bei dem das eingebrachte Kohlenstoffdioxid (2) einem Desorptionsprozess (20) für Kohlendioxid entnommen wird.

7. Verfahren (1) nach einem der Ansprüche 1 bis 6, bei dem die aufbereitete Aminosäuresalzlösung (15) einem Desorptionsprozess für Kohlendioxid zugeführt wird, wobei das in der aufbereiteten Aminosäuresalzlösung (15) enthaltene Kohlendioxid (2) in dem Desorptionsprozess (20) desorbiert wird.

8. Verfahren (1) nach einem der Ansprüche 6 oder 7, bei dem der Desorptionsprozess (20) Bestandteil eines Abscheideprozesses (22) für Kohlendioxid ist, der in einen fossil befeuerten Kraftwerksprozess (23) integriert ist.

9. Vorrichtung (30) zur Aufbereitung eines verunreinigten Absorptionsmittels für Kohlendioxid, umfassend
- einen ersten Reaktor (32), in den ein verunreinigtes Lösungsmittel und Kohlendioxid einbringbar ist,
- einen ersten Filter (33), der über eine Leitung (43) an den ersten Reaktor (32) angeschlossenen ist, zur Abscheidung von Carbonat und/oder Carbonatsalz aus einem Lösungsmittel,
- einen zweiten Reaktor (34), der über eine Leitung (46) an dem ersten Filter (33) angeschlossenen ist, zur Auskristallisation von Aminosäure und/oder Aminosäuresalz aus dem Lösungsmittel,
- einen zweiten Filter (35), der an dem zweiten Reaktor (34) angeschlossen ist, zur Abscheidung der auskristallisierten Aminosäure und/oder des Aminosäuresalzes aus dem Lösungsmittel, und
- einen Dissolver (36), der an den zweiten Filter (35) angeschlossen ist, dem auskristallisierte Aminosäure und/oder Aminosäuresalz und ein Lösemittel zuführbar ist.

10. Vorrichtung (30) nach Anspruch 9,
**dadurch gekennzeichnet, dass** die Vorrichtung (30) in eine Abscheidevorrichtung für Kohlendioxid integriert ist, wobei die Abscheidevorrichtung einen Absorptionsmittelkreislauf und einen Speicher für Kohlendioxid umfasst, und wobei der erste Reaktor (32) mit dem Speicher über eine Leitung (38) zur Zuführung von Kohlendioxid verbunden ist, und mit dem Absorptionsmittelkreislauf über eine Leitung (37) zur Zuführung eines verunreinigtes Lösungsmittel verbunden ist.

11. Vorrichtung (30) nach einem der Ansprüche 9 oder 10,
**dadurch gekennzeichnet, dass** dem ersten Reaktor (32) ein Verdampfer (57) vorgeschaltet ist, der zur Beheizung über eine Dampfleitung (60) mit einem Dampferzeuger einer fossil befeuerten Kraftwerksanlage verbunden ist.

12. Vorrichtung (30) nach Anspruch 9,
**dadurch gekennzeichnet, dass** der Verdampfer (57) über eine Leitung mit dem Dissolver (36) verbunden ist, sodass dem Dissolver (36) kondensierter Dampf als Lösemittel zuführbar ist.

13. Vorrichtung (30) nach einem der Ansprüche 9 bis 12,
**dadurch gekennzeichnet, dass** der erste Filter (33) über eine Leitung für Aminosäure und/oder Aminosäuresalz mit dem Dissolver (45) verbunden ist.

14. Vorrichtung (30) nach einem der Ansprüche 9 bis 13,
**dadurch gekennzeichnet, dass** der erste Reaktor (32) mit einem Speicher für Kohlendioxid verbunden ist, der Teil einer in die fossil befeuerte Kraftwerksanlage integrierten Abscheidevorrichtung für Kohlendioxid ist.

15. Vorrichtung (30) nach einem der Ansprüche 9 bis 14,
**dadurch gekennzeichnet, dass** der Dissolver (36) zur Ausleitung eines aufbereiteten Lösungsmittels mit einer Desorptionseinheit der Abscheidevorrichtung für Kohlendioxid verbunden ist.
